(19) Europäisches Patentamt
European Patent Office
Office européen des brevets

(11) Veröffentlichungsnummer: **0 298 288 B1**

(12) **EUROPÄISCHE PATENTSCHRIFT**

(45) Veröffentlichungstag der Patentschrift: **27.11.91**

(51) Int. Cl.⁵: **B01D 53/00**, B01D 53/34

(21) Anmeldenummer: **88109718.2**

(22) Anmeldetag: **17.06.88**

(54) **Verfahren zur Reduzierung der auf Tanklagern, Tankwagen-Füllstellen und Schiffen anfallenden Kohlenwasserstoff-Emissionen und Anlage zur Durchführung des Verfahrens.**

(30) Priorität: **19.06.87 DE 3720258**
**19.06.87 DE 3720259**

(43) Veröffentlichungstag der Anmeldung:
**11.01.89 Patentblatt 89/02**

(45) Bekanntmachung des Hinweises auf die Patenterteilung:
**27.11.91 Patentblatt 91/48**

(84) Benannte Vertragsstaaten:
**AT BE CH DE ES FR GB GR IT LI NL SE**

(56) Entgegenhaltungen:
**EP-A- 0 222 158**
**US-A- 4 386 944**
**US-A- 4 576 005**

(73) Patentinhaber: **MAR-RESEARCH GESELL-SCHAFT FÜR FORSCHUNG UND ENTWICK-LUNG MBH**
**Grosse Theaterstrasse 42**
**W-2000 Hamburg 36(DE)**

(72) Erfinder: **Sibbertsen, Walter, Prof.Dipl.-Ing.**
**Joachim-Sahling-Weg 109**
**W-2000 Hamburg 53(DE)**
Erfinder: **Krützmann, Peter, Dipl.-Ing.**
**Brüdtweg 21**
**W-2050 Hamburg 80(DE)**

(74) Vertreter: **Schmidt-Bogatzky, Jürgen, Dr. Ing.**
**Huth, Dietrich & Partner et al**
**Warburgstrasse 50**
**W-2000 Hamburg 36(DE)**

**Beschreibung**

Die Erfindung betrifft ein Verfahren zur Reduzierung der auf Tanklagern, Tankwagen-Füllstellen und Schiffen anfallenden Kohlenwasserstoff-Emission, bei dem das aus dem Tankbehälter abgesaugte Kohlenwasserstoff-Emissionen enthaltende und zu reinigende Gasgemisch in einer ersten Reinigungsstufe, insbesondere in einem Stoffaustauscher, abgekühlt und dabei ein Teil der Kohlenwasserstoff- Emissionen kondensiert und abgeschieden und in einem Sammelbehälter aufgefangen wird, und in einer zweiten Reinigungsstufe die in dem zu reinigenden Gasgemisch noch verbliebenen Kohlenwasserstoff-Emissionen in einer Wärmekraftmaschine verbrannt und die dabei freiwerdende Energie zum Antrieb einer zum Abkühlen des zu reinigenden Gasgemisches in der ersten Reinigungsstufe dienenden Einrichtung verwendet wird sowie zur Durchführung des Verfahrens ausgebildete Anlagen.

Bei der Lagerung und dem Umschlag von Mineralöl von flüssigen Mineralölerzeugnissen wie z.B. Vergaserkraftstoffen treten wegen des hohen Dampfdrucks erhebliche Emissionen auf. Neben der Umweltbelastung entstehen hierbei erhebliche betriebs- und volkswirtschaftliche Verluste, zu deren Vermeidung bereits verschiedene Rückgewinnungsverfahren vorgeschlagen worden sind. So ist eine indirekte Kondensation bei sehr tiefen Temperaturen und die Kombination Adsorption/Absorption bekannt. Das letztgenannte Verfahren arbeitet im explosiblen Bereich und stellt wegen der Brandgefahr durch die reaktionsfreudige Aktivkohle ein Sicherheitsrisiko dar. Dieser Nachteil soll durch eine kalte Kondensation mit überlagerter Absorption beseitigt werden können, wie es am Beispiel eines Benzinrückgewinnungsverfahrens in der DE-ZS "Erdöl und Kohle-Erdgas-Petrochemie", 1984, Bd. 37, S. 409-411 beschrieben ist. Hierbei wird die benzinbeladene Abluft zunächst durch eine Wäsche mit kaltem Benzin auf eine geringe Austrittsbeladung vorgereinigt und dann in einem Adsorber nachgereinigt. Der Nachteil dieses bekannten Verfahrens besteht darin, daß ein erheblicher apparativer Aufwand erforderlich ist, der hohe Investitions- und Betriebskosten verursacht. Um auf besonders wirtschaftliche Weise aus einem Gas Verunreinigungen wie Kohlenwasserstoffe oder Dämpfe organischer Flüssigkeiten weitgehend entfernen zu können, ist durch die EP-A-0 222 158 vorgeschlagen worden, das zu reinigende Gas in einer ersten Reinigungsstufe abzukühlen und hierbei einen Teil der Verunreinigungen abzuscheiden und in der zweiten Reinigungsstufe die in dem Gas verbliebenen Verunreinigungen in einer Wärmekraftmaschine zu verbrennen, die eine Kälteanlage zum Abkühlen des Gases in der ersten Reinigungsstufe betreibt. Dieses Verfahren läßt sich in der in der EP-A-0 222 158 beschriebenen Weise jedoch nur in Sonderfällen realisieren.

Da es sich in den meisten Fällen um sehr magere Gas-Luftgemische handelt, ist je nach Tankinhalt mit oft unterschiedlicher Gas-Luftzusammensetzungen zu rechnen. Der Gasanteil besteht in der Regel aus den leichteren Verdunstungsbestandteilen des eingelagerten Treibstoffes, wobei je nach Tankaufbau und Größe mit einer mehr oder weniger geschichteten Verteilung des Mischungsverhältnisses Luft/Gas zu rechnen ist. Dies bedeutet, daß eine Nachbehandlung aufgrund unterschiedlichen Zündverhaltens der vorliegenden Gasgemische bei Einsatz von Verbrennungsmaßnahmen nur schwer kontrollierbar durchzuführen ist. Zusätzlich erschwerend ist hierbei die Tatsache, daß sehr unterschiedliche Tankraumvolumina für die Bildung des Gas-Luftgemisches zur Verfügung stehen. Zum einen muß das im leeren Tank befindliche Gas-Luftgemisch bei Neubetankung sehr schnell wieder abgeführt werden, zum anderen ist das zur Verfügung stehende Gas-Luftgemisch in Umfang und Mischverhältnis sowohl von der Treibstofftemperatur, dem zur Verfügung stehenden Leerraum, als auch von der Art des Treibstoffes abhängig. Als zusätzliche Erschwernis für Nachbehandlungsmaßnahmen ist die stets vorhandene Gefahr der unkontrollierten Entzündung des vorhandenen Gas-Luftgemisches im Tankbereich anzusehen, die zusätzliche Sicherheitsvorkehrungen notwendig machen.

Die Aufgabe der Erfindung besteht darin, ein Verfahren der eingangs genannten Art und eine Anlage zur Durchführung des Verfahrens aufzuzeigen, mit dem folgende Bedingungen erfüllt werden können:

- äußerst weitgehende Entfernung von Kohlenwasserstoff-Emissionen aus dem Gas-Luft-Gemisch beim Betrieb der Anlage,
- sicherer Betrieb der Anlage bei Verarbeitung explosiver Gase,
- Betrieb bei unterschiedlichsten Umgebungsbedingungen wie Luftdruck, Temperatur und Feuchtigkeit,
- wirtschaftliche Nutzung des Energiegehaltes der anfallenden Gas-Luftgemische,
- bedarfsweise Nutzung von Kraft/Wärmemöglichkeiten,
- Möglichkeit der Installation bei unterschiedlich großen Tanksystemen und Einsatz bei stationären und mobilen Tankanlagen,
- möglichst niedrige Betriebs- und Wartungskosten.

Erfindungsgemäß erfolgt die Lösung der Aufgabe bezüglich des Verfahrens durch die kennzeichnenden Merkmale des Anspruchs 1 oder 2 oder 3 und bezüglich der Anlage durch die kennzeichnenden Merkmale des Anspruchs 8 oder 9 oder 10.

Weitere Merkmale der Erfindung werden in den abhängigen Ansprüchen beschrieben sowie nachstehend am Beispiel der in den Zeichnungen schematisch dargestellten Anlagen näher erläutert. Es zeigt

Fig. 1    ein schematisches Fließdiagramm einer Anlage,

Fig. 2    eine weitere Anlage in einer schematischen Darstellung,

Fig. 3    eine weitere Anlage in einer schematischen Darstellung,

Fig. 4    eine Anlagenteil zur Kondensation von Kohlenwasserstoffdämpfen mit einem Wirbelrohr,

Fig. 5    ein Anlagenteil zur Kondensation von Kohlenwasserstoffdämpfen mit zwei Wirbelrohren und einem Düsenverdichter,

Fig. 6    eine weitere Ausführung einer Anlage nach Fig. 1 bis 3 im Ausschnitt,

Fig. 7    einen als Blasenabsorber ausgebildeten Stoffaustauscher in einer schematischen Darstellung.

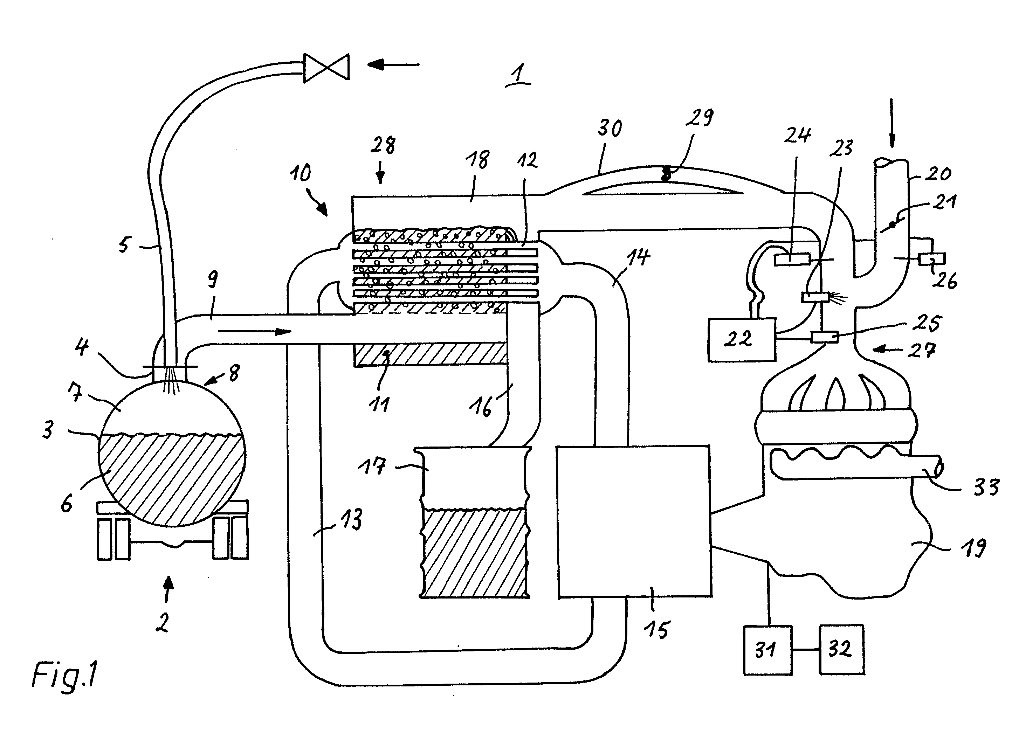

In der Fig. 1 ist schematisch dargestellt, wie der Tank 3 eines Tankwagens 2 über eine Fülleitung 5 mit einem flüssigen Mineralölprodukt wie z.B. Benzin gefüllt wird. Mit wachsendem Füllstand des im Tank 3 befindlichen flüssigen Mineralölprodukts 6 verringert sich das Volumen des Gasraums 7. Das in diesem befindliche Gas-Luft-Gemisch mit Kohlenwasserstoff-Emissionen wird über eine Leitung 9 abgeführt. Die Leitung 9 ist an der Oberseite 8 des Tanks 3 am Tankdom 4 angeschlossen.

Die Leitung 9 ist mit einem Stoffaustauscher 10 verbunden. Der Stoffaustauscher 10 weist eine Füllung 11 aus einem flüssigen Mineralölprodukt wie z.B. Benzin auf, die einen Wärmetauscher 12 bzw. dessen Wärmeaustauschrohre umgibt. Der Wärmetauscher 12 ist mittels Kühlmittelleitungen 13, 14 mit einem Kühlaggregat 15 verbunden. Durch das durch den Wärmetauscher 12 strömende niedrig temperierte Kühlmittel wird die Füllung 11 des Stoffaustauschers 10 herabgekühlt, so daß in der Füllung 11 Kohlenwasserstoffverbindungen des vom Tank 3 eindringenden Gas-Luft-Gemisches ausgeschieden werden. An dem Stoffaustauscher 10 ist eine Überlaufleitung 16 vorgesehen, die mit einem Sammelbehälter 17 verbunden ist. Über die Überlaufleitung 16 wird die im Stoffaustauscher 10 aus dem Gas-Luft-Gemisch ausgeschiedene Menge von verflüssigten Kohlenwasserstoffverbindungen abgeleitet und kann vom Sammelbehälter 17 einer weiteren Verwendung zugeführt werden.

Der Gasaustritt des Stoffaustauschers 10 ist mittels einer Leitung 18 mit einer Brennkraftmaschine 19 verbunden, die als Antriebseinrichtung für das Kühlaggregat 15 dient. Die Leitung 18 ist mit einer Zuluftleitung 20 verbunden, die ein Drosselorgan 21 aufweist und über die für die Verbrennung in der Brennkraftmaschine 19 benötigte Verbrennungsluft angesaugt wird. Das Drosselorgan 21 ist über einen Regler 22 in Abhängigkeit von der Konzentration von Kohlenwasserstoffverbindungen in dem aus dem Stoffaustauscher 10 austretenden Gas-Luft-Gemisch und/oder dem Sauerstoffbedarf für die Verbrennung zusätzlich in die Brennkraftmaschine 19 eingespritzter Brennstoffe einstellbar. Für diese zusätzliche Einspritzung ist eine Einspritzdüse 23 vorgesehen, die über eine Einspritzpumpe mit einem besonderen Benzintank oder aber auch mit dem Sammelbehälter 17 verbunden sein kann. Gemischsensoren 24, 25 im Bereich des Ansaugstutzens 27 der Brennkraftmaschine 19 sowie ein Sensor 26 in der Zuluftleitung ermöglichen die Erfassung der für eine optimale Verbrennung in dem Verbrennungsmotor 19 erforderlichen Parameter, die vom Regler 22 regelungstechnisch aufbereitet und in die erforderlichen Regelimpulse umgewandelt werden.

Die Brennkraftmaschine 19 kann ferner mit einem Generator 31 verbunden sein, an den ein ausreichend dimensionierter Akkumulator oder Batteriesatz 32 angeschlossen ist. Hierdurch ist es möglich, die Brennkraftmaschine 19 in der Startphase zunächst längere Zeit mechanisch so lange durchzudrehen, bis über die Leitung 18 ein verbrennungsfähiges Gas-Luft-Gemisch durch den Stoffaustauscher 10 angesaugt wird.

Es ist aber auch möglich, zwischen dem Ansaugstutzen 27 der Brennkraftmaschine 19 und dem stoffaustauscherseitigen Anschluß 28 der Leitung 18 einen Verdichter 29 anzuordnen. Hierzu wird zweckmäßigerweise zu der Leitung 18 ein Beipaßkanal 30 vorgesehen, in dem der Verdichter 29 installiert sein kann. Diese Ausführung ermöglicht es, beim Start der Anlage 1 mittels des Verdichters 29 Gas-Luft-Gemisch anzusaugen und verdichtet zur Brennkraftmaschine 19 zu fördern. Ist bei Betrieb der Brennkraftmaschine 19 deren Saugleistung ausreichend groß, um das erforderliche Gas-Luft-Gemisch ansaugen zu können, kann der Verdichter 29 wieder außer Betrieb genommen werden. In diesem Fall bildet der Verdichter 29 für das anzusaugende Gas-Luft-Gemisch keinen Strömungswiderstand.

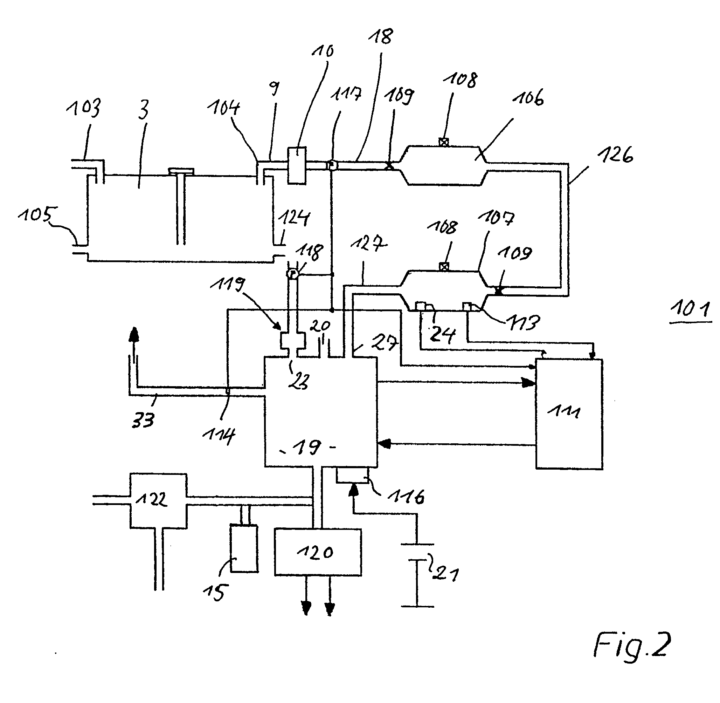

Die Anlage 101 nach Fig. 2 besteht aus einem Tank 3 für z. B. Treibstoff, Gasdruckbehältern 106, 107 sowie einer elektronisch gesteuerten Brennkraftmaschine 19, die vorzugsweise als Freikolben-Brennkraftmaschine ausgebildet ist. Der Tank 3 weist einen Zuluftstutzen 103, einen Abluftstutzen 104 zum Anschluß der Leitung 9, einen Füllstutzen 105 zum Anschluß einer Fülleitung 5 und einen Entnahmestutzen 124 für den Tankinhalt auf. Der Abluftstutzen 104 ist mittels der Leitung 9 mit einem Stoffaustauscher 10 verbunden, der mit einer Leitung 18 an einen Gasdruckbehälter 106 angeschlossen ist. In der Leitung 18 ist eine Gasdruckpumpe 117 angeordnet. Dieser nachgeschaltet befindet sich in der Leitung 18 ein Überdruck- und Rückschlagventil 109. Der Gasdruckbehälter 106 weist ferner ein Überdruckventil 108 auf. Der Gasdruckbehälter 106 ist mittels einer Leitung 126 über ein weiteres Überdruck- und Rückschlagventil 109 mit einem weiteren Gasdruckbehälter 107 mit einem weiteren Überdruckventil 108 verbunden. Dieser Gasdruckbehälter 107 ist mittels einer Leitung 127 mit dem Ansaugstutzen 27 der Brennkraftmaschine 19 verbunden.

Die Brennkraftmaschine 19 weist eine Kraftstoffeinspritzanlage 119 mit einer Einspritzpumpe 118 und einer Einspritzdüse 23 für jeden Zylinder der Brennkraftmaschine 19 auf. Zum Betrieb der Brennkraftmaschine 19 ist diese mit einem E-Motor/Generator 116 verbunden, der an einen Batteriesatz 21 angeschlossen ist. Ausgangsseitig steht die Brennkraftmaschine 19 mit einem Generator 31 sowie wahlweise mit einer Enttankungspumpe 122 und einem Kühlaggregat 15 für den Stoffaustauscher 10 in Verbindung.

Für den Betrieb der Brennkraftmaschine 19 ist ein elektronisches Motorsteuergerät 111 vorgesehen, das mit einem Abgassensor 114 in der Abgasleitung 33, einem Gemischsensor 24 und Drucksensor 113 im Gasdruckbehälter 107, der Einspritzpumpe 118 sowie der Gasdruckpumpe 117 verbunden ist. Die Gasdruckpumpe 117 ist explosionsgeschützt ausgebildet. Ferner ist eine Zuluftleitung 20 vorgesehen, die ein Drosselorgan 21 aufweisen kann.

Bei Bedarf wird die elektrische Gasdruckpumpe 117 vom Motorsteuergerät 111 eingeschaltet und pumpt über das Überdruck- und Rückschlagventil 109 das Gas-Luftgemisch aus dem Tank 3 in den Gasdruckbehälter 106. Von diesem gelangt das Gas-Luftgemisch über die Leitung 126 in den Gasdruckbehälter 107. Die Brennkraftmaschine 19 entnimmt das Gas-Luftgemisch beim Einschalten aus dem Gasdruckbehälter 107 und verbrennt dieses Magergemisch unter eventueller zusätzlicher Kraftstoffzugabe mittels der Kraftstoff-Einspritzanlage 119. Die Brennkraftmaschine 19 kann hierbei sowohl elektrische Energie über den Generator 120 abgeben als auch bei einer Enttankung des Tanks 3 dessen Enttankungspumpe 122 oder das Kühlaggregat 15 für den Stoffaustauscher 10 antreiben. Ein eventuell beim Betrieb der Brennkraftmaschine 19 entstehender Flammenrückschlag bewirkt aufgrund der Druckerhöhung ein Schließen des Überdruck-und Rückschlagventils 109 am Gasdruckbehälter 107. Sofern dieses Überdruck- und Rückschlagventil 109 nicht voll wirksam sein sollte, wird dessen Funktion von dem dem Gasdruckbehälter 106 zugeordneten Überdruck- und Rückschlagventil 109 unterstützt. Somit ist ein sicherer Betrieb der Anlage 101 möglich. Die Abgassonde 114 mißt ständig die während des Motorbetriebes entstehenden Abgase und optimiert mit ihren Werten die Einstellungsparameter für die Motorsteuerung durch das Motorsteuergerät 111.

Die Anlage 101 ist für alle Tanksysteme einsetzbar, die brennbare Flüssigkeiten lagern. Der Vorteil der Verwendung einer Freikolben-Brennkraftmaschine als Brennkraftmaschine 19, wie sie z. B. in der EP-B-00 27 123 beschrieben ist, besteht in der Vielstoffähigkeit wegen der variablen Kompression, in der Möglichkeit zum Direktstart unter Last ohne Leerlaufphase, in der optimalen Wirkungsgradeinstellung unabhängig von der anhängenden Last durch elektronische Parameteroptimierung bei der Verbrennungsprozeßsteuerung sowie in der kontrollierten Abgasabgabe an die Umwelt.

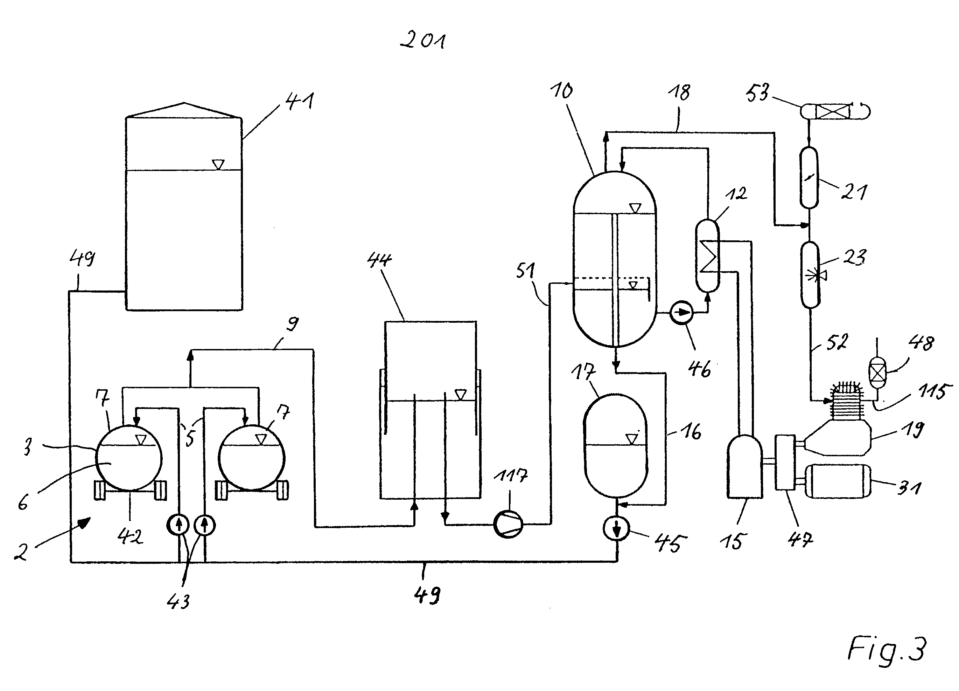

Die in Fig. 3 dargestellte Anlage 201 stellt eine weitere Anlagenvariante dar. Ein Vorratstank 41 ist über eine Leitung 49 mit einer Betankungsanlage 42 verbunden, bei der mittels jeweils einer Förderpumpe 43 über Fülleitungen 5 ein Tank 3 eines Tankwagens mit z. B. Benzin befüllt wird. Hierbei in den Gasräumen 7 der Tanks 3 entstehende Gas-Luft-Gemische mit Kohlenwasserstoff-Emissionen strömen über die Leitung 9 in einen Gasspeicher 44, der als Gaspuffer dient. Aus diesem Gasspeicher 44 wird das Gas-Luft-Gemisch mittels einer Gasdruckpumpe 117 bzw. eines Verdichters durch die Leitung 51 in den Stoffaustauscher 10 gefördert. In diesem wird ein Teil der in dem Gas-Luft-Gemisch enthaltenen Kohlenwasserstoffdämpfe durch als Waschmittel dienendes unterkühltes Benzin bis zu einem Restgehalt von z. B. 5 bis 10 g/m³ ausgewaschen. Hierzu wird dieses Benzin im Kreislauf aus dem Sumpf des Stoffaustauschers 10 mittels einer Umlaufpumpe 46 durch einen Wärmetauscher 12 gepumpt und gekühlt wieder in den Stoffaustauscher 10 eingeleitet. Durch Kondensation der Kohlenwasserstoffdämpfe entstehendes Überschußbenzin wird über die Überlaufleitung 16 dem Sammelbehälter 17 zugeführt. Von diesem wird der Inhalt des Sammelbehälters 17 mittels einer in der Leitung 49 angeordneten Pumpe 45 dem Vorratstank 41 und/oder über die Förderpumpe 43 den Tanks 3 zugeführt. Über die Leitung 18 wird das Restgas-Luft-Gemisch der Ansaugleitung 52 der Brennkraftmaschine 19 zugeführt und über eine Einspritzdüse 23 mit Kraftstoff angereichert. Gleichzeitig wird über einen Luftfilter 53 eine von einem Drosselorgan 21 geregelte Menge Verbrennungsluft dem Restgas-Luft-Gemisch beigemischt. Die aus der Brennkraftmaschine 19 austretenden Abgase werden über die Abgasleitung 115 einem Katalysator 48 zugeführt und durch diesen nachgereinigt und entsprechen danach den Normen für schadstoffarme Verbrennungsmotoren. Die Brennkraftmaschine 19 ist über eine Wechselkupplung 47 mit dem Verdichter des Kühlaggregats 15 für den Wärmetauscher 12 oder mit einem Generator 31 bzw. einem Elektromotor verbunden.

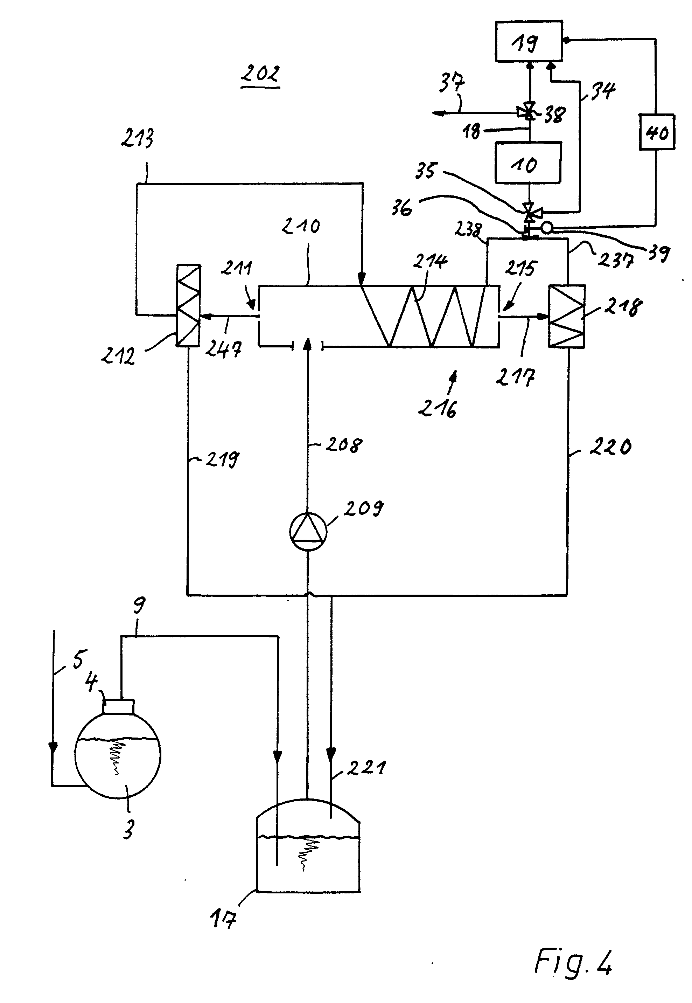

Fig. 4 zeigt eine weitere Ausbildung der ersten Reinigungsstufe für eine Anlage 1, 101, 201 durch ein Anlagenteil 202. Der Tank 3 weist einen Tankdom 4 auf und kann mittels einer Füllleitung 5 befüllt werden, die am Boden des Tankes 3 angeschlossen ist. Aus dem oberen Bereich des Tankes 3 ist durch den Tankdom 4 eine Leitung 9 bis in ein in einem Sammelbehälter 207 befindliches flüssiges Mineralölerzeugnis geführt. Am Deckel des Sammelbehälters 207 ist eine Leitung 208 angeschlossen, in der ein Verdichter 209 angeordnet ist. Die Leitung 208 ist mit einem Wirbelrohr 210 verbunden. Die Einführung der Leitung 208 in das Wirbelrohr 210 erfolgt tangential.

Die Kaltblende 211 des Wirbelrohrs 210 ist mittels einer Leitung 247 mit einem Prallabscheider 212 verbunden. Der Ablauf des Prallabscheiders 212 ist über eine Leitung 219 mit einer weiteren Leitung 221 verbunden, die in dem Sammelbehälter 207 ragt. Am strömungsseitigen Ausgang des Prallabscheiders 212 ist eine Leitung 213 angeschlossen, die mit einem Wärmetauscher 214 verbunden ist. Der Wärmetauscher 214 ist im warmdrosselseitigen Abschnitt 216 des Wirbelrohrs 210 angeordnet. Das zu der Warmdrossel 215 strömende Gas-Luft-Gemisch wird durch den Wärmetauscher 214 geführt und in diesem abgekühlt. Die Warmdrossel 215 ist mittels einer Leitung 217 mit einem weiteren Prallabscheider 218 verbunden. Der Ablauf dieses Prallabscheiders 218 steht mittels einer Leitung 220 mit der Leitung 221 und damit mit dem Sammelbehälter 17 in Verbindung. Der strömungsseitige Ausgang des Prallabscheiders 218 ist mittels einer Leitung 237 mit dem Stoffaustauscher 10 verbunden, der ebenfalls mittels einer Leitung 238 mit dem strömungsseitigen Ausgang des Wärmetauschers 214 in Verbindung steht. In dem Stoffaustauscher 10 wird das über die Leitungen 237, 238 zugeführte Gas-Luft-Gemisch nachgereinigt, bevor es der Brennkraftmaschine 19 zugeführt wird. Sofern es die Betriebsbedingungen und Betriebsparameter zulassen, kann das Luft-Gas-Gemisch unter Umständen auch aus dem Stoffaustauscher 10 direkt in die Atmosphäre ausgelassen oder ohne Nachreinigung in dem Stoffaustauscher 10 direkt der Brennkraftmaschine 19 zugeführt werden. Hierzu ist eine den Stoffaustauscher 10 umgehende Beipaßleitung 34 vorgesehen, die mit dem Ansaugstutzen 27 der Brennkraftmaschine 19 verbunden ist. Die Beipaßleitung 34 ist an ein Dreiwegeventil 35 in der Vorlaufleitung 36 zum Stoffaustauscher 10 angeschlossen. In der zwischen dem Stoffaustauscher 10 und der Brennkraftmaschine 19 angeordneten Leitung 18 ist ein weiteres Dreiwegeventil 38 vorgesehen, an das eine Auslaßleitung 37 angeschlossen ist, über die aus dem Stoffaustauscher 10 strömendes Gas-Luft-Gemisch entweder in die Atmosphäre oder aber in einen als Zwischenspeicher dienenden Gasdruckbehälter geführt werden kann. Hierdurch ist es möglich, auch bei einer Störung an der Brennkraftmaschine 19 die Tankentsorgung weiter durchführen zu können. Die Dreiwegeventile 35, 38 werden von einem Regler 40 geregelt, der mit einer Sonde 39 zur Gaskonzentrationsmessung, der Brennkraftmaschine 19 und ggf. einem nicht näher dargestellten Führungsregler der Anlage verbunden ist.

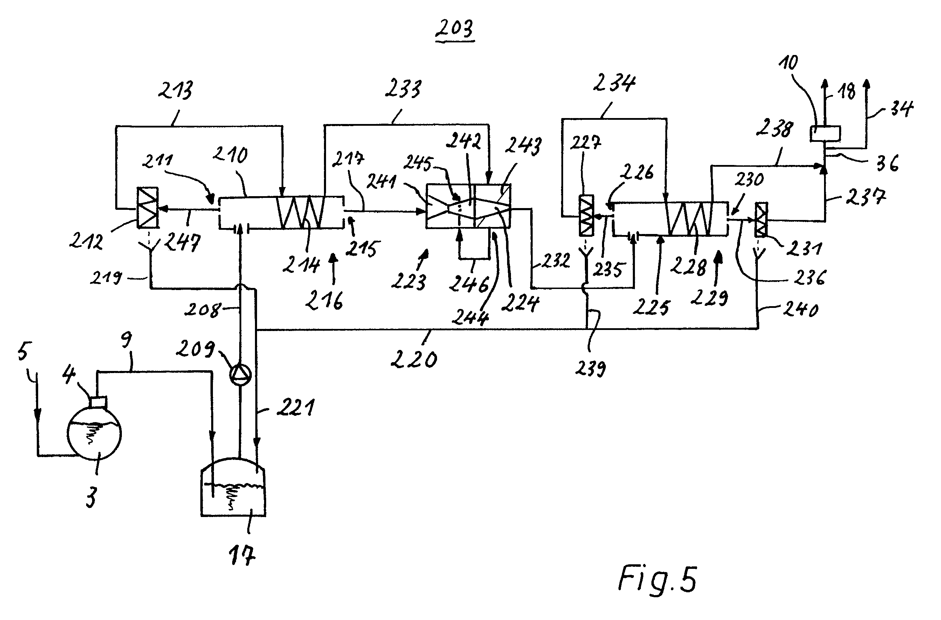

Die in Fig. 5 dargestellte weitere Ausbildung der ersten Reinigungsstufe durch ein Anlagenteil 203 weist zwei Wirbelrohre 210, 225 auf, die über einen Düsenverdichter 223 miteinander verbunden sind. Die Ausbildung des dem Wirbelrohr 210 zugehörigen Anlagenkomplexes entspricht der Ausbildung entsprechend dem Anlagenteil 202. Lediglich die Warmdrossel 215 und der Ausgang des Wärmetauschers 216 sind mittels Leitungen 217, 233 mit dem Düsenverdichter 223 verbunden.

Der Düsenverdichter 223 weist eingangsseitig eine Düse 241 auf, die über die Leitung 217 mit der Warmdrossel 215 verbunden ist. An die Düse 241 schließt sich in Strömungsrichtung ein Diffusor 242 an. In diesem kann das durch die Düse 241 eintretende Gas-Luft-Gemisch adiabatisch expandieren. An den Diffusor 242 schließt sich eine Druckdüse 224 an, in der das Gas-Luft-Gemisch z.B. isotherm verdichtet werden kann. Hierzu ist die Druckdüse 224 mit einem Wärmetauscher 243 umgeben, der über eine Leitung 233 mit aus dem Wärmetauscher 216 des Wirbelrohrs 210 ausströmendem Gas-Luft-Gemisch beaufschlagt wird. Der Ausgang 244 des Wärmetauschers 243 ist mittels einer Leitung 246 mit Ansaugöffnungen 245 verbunden, die im Mantel des Diffusors 242 ausgebildet sind. Hierdurch ist es möglich, die Teilmenge des Gas-Luft-Gemisches, die beim Wirbelrohr 210 aus der Kaltblende 211 ausgeströmt ist, wieder der Teilmenge des Gas-Luft-Gemisches zuzufügen, die beim Wirbelrohr 210 aus der Warmdrossel 215 ausgetreten ist.

Der Ausgang der Druckdüse 224 ist über eine Leitung 232 mit einem weiteren Wirbelrohr 225 verbunden. Dessen Kaltblende 226 ist über eine Leitung 235 an einen weiteren Prallabscheider 227 angeschlossen, der über eine Leitung 234 mit einem im warmdrosselseitigen Abschnitt 229 des Wirbelrohrs 225 angeordneten Wärmetauscher 228 verbunden ist. Die Warmdrossel 230 dieses Wirbelrohrs 225 ist über eine Leitung 236 mit einem weiteren Prallabscheider 231 verbunden. Die Ausgänge des Prallabscheiders 231 und des Wärmetauschers 228 sind mittels Leitungen 237, 238 mit der Vorlaufleitung 36 eines Stoffaustauschers 10 verbunden. Die den Leitungen 237, 238 nachgeschalteten Anlagenelemente können wie zu Fig. 4 am Beispiel des Anlagenteils 202 beschrieben ausgebildet sein. Die Prallabscheider 227, 231 sind über Leitungen 239, 240 mit der Leitung 220 verbunden, über die ein Anschluß an den Sammelbehälter 17 besteht.

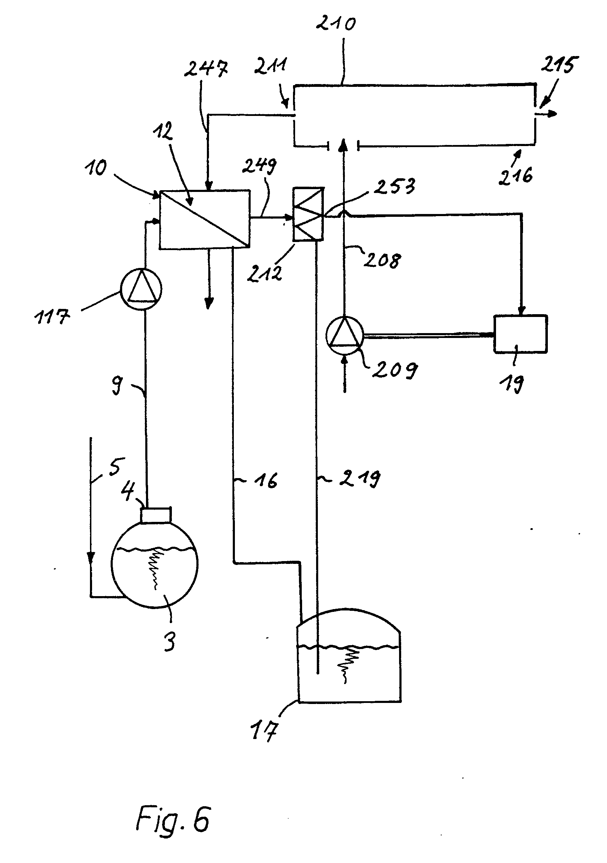

In Fig. 6 ist eine weitere Ausgestaltung einer Anlage 1, 101, 201 im Ausschnitt dargestellt, bei der das Kohlenwasserstoff-Emissionen enthaltende Gas-Luft-Gemisch aus dem Tank 3 über eine Leitung 9 mittels einer Gasdruckpumpe 117 oder Gebläses durch den Stoffaustauscher 10 geleitet wird. Als Kühlmedium für den Wärmetauscher 12 des Stoffaustauschers 10 dient aus einer Kaltblende 211 eines Wirbelrohrs 210 austretende Kühlluft. Dem Wirbelrohr 210 wird mittels eines Verdichters 209 Druckluft zugeführt, der von der Brennkraftmaschine 19 angetrieben wird. Hierzu ist zwischen Verdichter 209 und Wirbelrohr 210 eine Druckleitung 208 angeordnet. Das in dem Stoffaustauscher 10 tiefgekühlte Gas-Luft-Gemisch strömt über eine Leitung 249 durch einen Prallabscheider 212. Die in dem Prallabscheider 212 ausgeschiedenen kondensierten Kohlenwasserstoffe werden über die Leitung 219 einem Sammelbehälter 17 zugeführt. Dieser ist wie in Fig. 1 beschrieben mittels einer Überlaufleitung 16 mit dem Stoffaustauscher 10 verbunden. So können auch die im Stoffaustauscher 10 aus dem Gas-Luft-Gemisch ausgeschiedenen verflüssigten Kohlenwasserstoffverbindungen in den Sammelbehälter 17 abgeleitet werden. Über den Gas-Luft-Gemisch-Auslaß 253 des Prallabscheiders 212 wird das Restgas-Luft-Gemisch wie oben beschrieben der Brennkraftmaschine 19 oder einer weiteren Nachbehandlung in Wirbelrohranordnungen entsprechend der Anlagenteile 202, 203 zugeführt, um dann in der Brennkraftmaschine 19 verbrannt oder aber ins Freie geleitet zu werden. Der Stoffaustauscher 10 kann somit in Strömungsrichtung des Gas-Luft-Gemisches sowohl vor der Wirbelrohranordnung wie auch nach der Wirbelrohranordnung vorgesehen werden.

Mittels der beschriebenen Anlagen 1, 101, 201 ist es möglich, ohne Verwendung mechanisch aufwendiger Apparate Kohlewasserstoffe enthaltende aus Tanks emittierende Gas-Luft-Gemische so zu behandeln, daß durch Kondensation bei Tiefkühlung die Kohlenwasserstoffe soweit ausgeschieden werden, bis eine Beeinträchtigung der Umwelt nicht mehr zu befürchten ist. Durch eine entsprechende Kombination der modulartig ausgebildeten Anlagenelemente kann die jeweilige Anlage leicht an die örtlich vorliegenden Betriebsbedingungen angepaßt werden, wobei Änderungen der Betriebsparameter durch eine geeignete elektronische Regelung beim Betrieb der Anlage berücksichtigt werden. Wenn Wirbelrohre 210, 225 zum Einsatz kommen, ist es zweckmäßig, die Warmdrossel 215, 230 einstellbar auszubilden, damit eine individuelle Anpassung der Wirbelrohre 210, 225 an die jeweilige Anlage 1, 101, 201 erfolgen kann. Eine solche Ausbildung von Wirbelrohren 210, 225 einschl. der zweckentsprechenden Ausbildung des Wirbelkammerblocks und des Kaltluftaustritts ist beispielsweise in der DE-A-3 639 893 beschrieben, kann jedoch zur Optimierung eines Wirbelrohrs konstruktiv auch variiert werden.

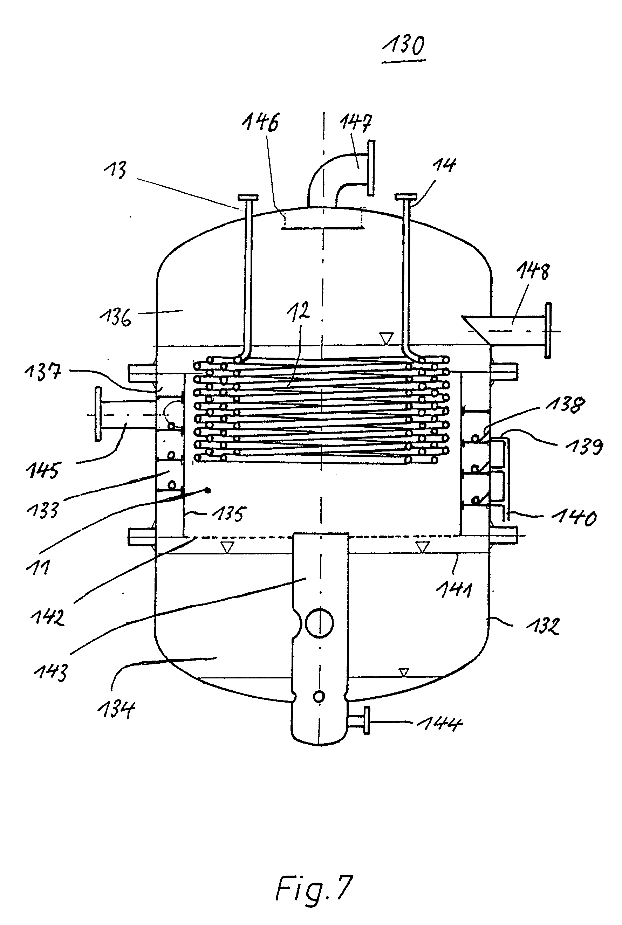

Fig. 7 zeigt einen Stoffaustauscher 10 mit integriertem Wärmetauscher 12, der als Blasenabsorber 130 nach dem Funktionsprinzip einer Blasenkolonne mit Siebboden gestaltet ist. Der Blasenabsorber 130 weist einen oberen Gassammeldom · 136 und einen unteren Sumpf 134 auf. Im mittleren Teil des Blasenabsorbers 130 ist ein Wärmetauscher 12 angeordnet, der als Rippenrohrwärmetauscher ausgebildet sein kann und dessen Kühlmittelleitungen 13, 14 durch den Gassammeldom 136 nach außen geführt sind. Zwischen Wärmetauscher 12 und dem Gehäuse 132 des Blasenabsorbers 130 ist ein Mantelrohr 135 angeordnet, durch das ein Ringspalt 137 gebildet wird. Dieser Ringspalt 137 ist nach oben verschlossen. In dem Ringspalt 137 ist das Mantelrohr 135 spiralig umgebend eine Wanne 133 ausgebildet, die zum Gehäuse 132 gerichtete Leitbleche 138 aufweist. Diesen sind durch das Gehäuse 132 geführte Abflußrohre 139 zugeordnet, die zu einer Abflußleitung 140 zusammengefaßt sind. Das durch den Gaseinfüllstutzen 145 in den Blasenabsorber 130 eingetragene und in dem Ringspalt 137 von ausgeschiedenem Wasser befreite Gas-Luft-Gemisch strömt unten aus dem Ringspalt 137 aus und perlt durch den am unteren Endabschnitt 141 des Mantelrohrs 135 angeordneten Siebboden 142 nach oben in den Gassammeldom 136. Das in diesem befindliche Restgas-Luft-Gemisch ist beim Durchströmen der Füllung 11 aus Benzin od. dgl. weitgehend von Kohlenwasserstoffbestandteilen gereinigt worden. Hierbei abgeschiedenes Benzin wird über den Überlauf 148 zum Sammelbehälter 17 abgeführt. Durch den Sumpf 134 ist ein Ablaufrohr 143 bis außerhalb des Gehäuses 132 geführt, das einen Ablaßstutzen 144 aufweist. Oben wird das Restgas-Luft-Gemisch über einen Tropfenabscheider 146 in den Gasaustrittstutzen 147 geleitet und einer weiteren Behandlung zugeführt.

Es ist auch möglich, in der Anlage 1, 101, 201 ergänzend oder alternativ als Stoffaustauscher 10 eine Membrankammer mit mikroporösen Membranen vorzusehen, sofern dieses bedingt durch die Betriebsparameter der Anlage 1, 101, 201 im Bezug auf die Parameter des zu entsorgenden Tanks 3 zweckmäßig ist. Die Membranen können als Silikonmembranen oder Polyetherimidmembranen ausgebildet sein, wobei eine konstruktive Gestaltung als Kompositmembran möglich ist. Eine derartige Membrankammer kann in Reihenschaltung oder Parallelschaltung zu den oben beschriebenen Anlagenkomponenten in der Anlage 1, 101, 201 angeordnet werden.

## Patentansprüche

1. Verfahren zur Reduzierung der auf Tanklagern, Tankwagen-Füllstellen und Schiffen anfallenden Kohlenwasserstoff-Emission, bei dem das aus dem Tank oder Tankbehälter abgesaugte Kohlenwasserstoff-Emissionen enthaltende und zu reinigende Gas-Luft-Gemisch in einer ersten Reinigungsstufe abgekühlt und dabei in einem Stoffaustauscher bezüglich der Kohlenwasserstoffverbindungen teilweise entgast wird und die kondensierten Kohlenwasserstoffe in einem Sammelbehälter aufgefangen werden, und in einer zweiten Reinigungsstufe die in dem zu reinigenden Gasgemisch noch verbliebenen Kohlenwasserstoff-Emissionen in einer Wärmekraftmaschine verbrannt und die dabei freiwerdende Energie zum Antrieb einer zum Abkühlen des zu reinigenden Gasgemisches in der ersten Reinigungsstufe dienenden Einrichtung verwendet wird, dadurch gekennzeichnet, daß die in der ersten Reinigungsstufe tiefgekühlten ausgeschiedenen Kohlenwasserstoffdämpfe sich verflüssigt in die aus gekühlten flüssigen Mineralölprodukten wie Benzin bestehende Füllung des Stoffaustauschers einmischen, daß dann das aus dem Stoffaustauscher austretende Gas-Luft-Gemisch mit vermindertem Anteil von Kohlenwasserstoffverbindungen mit Verbrennungsluft gemischt einer elektronisch gesteuerten Brennkraftmaschine zugeführt wird, deren Betriebsparameter von einem elektronischen Motorsteuergerät in Abhängigkeit von dem Druck und der Zusammensetzung des Gas-Luftgemisches eingestellt werden, daß zur Vergleichmäßigung der Verbrennungsvorgänge in der Brennkraftmaschine in diese bedarfsabhängig Kraftstoff eingespritzt wird und daß die von der Brennkraftmaschine abgegebene Leistung zum Betrieb einer Kühleinrichtung oder eines Generators zum Betrieb einer Kühleinrichtung verwendet wird, die die Füllung des Stoffaustauschers kühlt.

2. Verfahren zur Reduzierung der auf Tanklagern, Tankwagen-Füllstellen und Schiffen anfallenden Kohlenwasserstoff-Emission, bei dem das aus dem Tank oder Tankbehälter abgesaugte Kohlenwasserstoff-Emissionen enthaltende und zu reinigende Gas-Luft-Gemisch in einer ersten Reinigungsstufe abgekühlt und dabei ein Teil der Kohlenwasserstoff-Emissionen kondensiert und abgeschieden und in einem Sammelbehälter aufgefangen wird, und in einer zweiten Reinigungsstufe die in dem zu reinigenden Gasgemisch noch verbliebenen Kohlenwasserstoff-Emissionen in einer Wärmekraftmaschine verbrannt und die dabei freiwerdende Energie zum Antrieb einer zum Abkühlen des zu reinigenden Gasgemisches in der ersten Reinigungsstufe dienenden Einrichtung verwendet wird, dadurch gekennzeichnet, daß das zu reinigende Gas-Luft-Gemisch tangential in mindestens ein Wirbelrohr eingeblasen wird, daß das aus der Kaltblende ausströmende abgekühlte Gas-Luft-Gemisch durch einen ersten Prallabscheider strömt, wobei kondensierte Kohlenwasserstoffe abgeschieden und flüssig einem Sammelbehälter zugeführt werden, daß das aus dem ersten Prallabscheider austretende tiefgekühlte Gas-Luft-Gemisch durch einen Wärmetauscher in dem der Warmdrossel zugewandten Abschnitt des Wirbelrohrs strömt, daß das der Warmdrossel zuströmende Gas-Luft-Gemisch durch den Wärmetauscher strömt und in diesem abgekühlt wird und nach dem Austritt aus der Warmdrossel durch einen zweiten Prallabscheider geführt wird, wobei kondensierte Kohlenwasserstoffe abgeschieden und flüssig dem Sammelbehälter zugeführt werden, und daß die aus dem in Strömungsrichtung des Gas-Luft-Gemisches letzten Prallabscheider und Wärmetauscher ausströmenden Teilmengen des Gas-Luft-Gemisches einer elektronisch gesteuerten Brennkraftmaschine zugeführt werden, deren Betriebsparameter von einem elektronischen Motorsteuergerät in Abhängigkeit von dem Druck und der Zusammensetzung des Gas-Luftgemisches eingestellt werden, daß zur Vergleichmäßigung der Verbrennungsvorgänge in der Brennkraftmaschine in diese bedarfsabhängig Kraftstoff eingespritzt wird und daß die von der Brennkraftmaschine abgegebene Leistung zum Betrieb eines Verdichters zur Kompression des in der ersten Reinigungsstufe in das erste Wirbelrohr eingeblasenen Gas-Luft-Gemisches verwendet wird.

3. Verfahren zur Reduzierung der auf Tanklagern, Tankwagen-Füllstellen und Schiffen anfallenden Kohlenwasserstoff-Emission, bei dem das aus dem Tank oder Tankbehälter abgesaugte Kohlenwasserstoff-Emissionen enthaltende und zu reinigende Gas-Luft-Gemisch in einer ersten Reinigungsstufe abgekühlt und dabei in einem Stoffaustauscher bezüglich der Kohlenwasserstoffverbindungen teilweise entgast wird und die kondensierten Kohlenwasserstoffe in einem Sammelbehälter aufgefangen werden, und in einer zweiten Reinigungsstufe die in dem zu reinigenden Gasgemisch noch verbliebenen Kohlenwasserstoff-Emissionen in einer Wärmekraftmaschine verbrannt und die dabei freiwerdende Energie zum Antrieb einer zum Abkühlen des zu reinigenden Gasgemisches in der ersten Reinigungsstufe dienenden Einrichtung verwendet wird, dadurch gekennzeichnet, daß die in der ersten Reinigungsstufe tiefgekühlt ausgeschiedenen Kohlenwasserstoffdämpfe sich verflüssigt in die aus gekühlten flüssigen Mineralölprodukten wie Benzin bestehende Füllung des Stoffaustauschers einmischen und die aus dem Stoffaustauscher austretende Flüssigkeit, wie Benzin, in einem Sammelbehälter aufgefangen wird, daß dann das aus dem Stoffaustauscher austretende Gas-Luft-Gemisch mit vermindertem Anteil von Kohlenwasserstoffverbindungen tangential in mindestens ein Wirbelrohr eingeblasen wird, daß das aus der Kaltblende ausströmende abgekühlte Gas-Luft-Gemisch durch einen ersten Prallabscheider strömt, wobei kondensierte Kohlenwasserstoffe abgeschieden und flüssig einem Sammelbehälter zugeführt werden, daß das aus dem ersten Prallabscheider austretende tiefgekühlte Gas-Luft-Gemisch durch einen Wärmetauscher in dem der Warmdrossel zugewandten Abschnitt des Wirbelrohrs strömt, daß das der Warmdrossel zuströmende Gas-Luft-Gemisch durch den Wärmetauscher strömt und in diesem abgekühlt wird und nach dem Austritt aus der Warmdrossel durch einen zweiten Prallabscheider geführt wird, wobei kondensierte Kohlenwasserstoffe abgeschieden und flüssig dem Sammelbehälter zugeführt werden, und daß die aus dem in Strömungsrichtung des Gas-Luft-Gemisches letzten Prallabscheider und Wärmetauscher ausströmenden Teilmengen des Gas-Luft-Gemisches einer elektronisch gesteuerten Brennkraftmaschine zugeführt werden, deren Betriebsparameter von einem elektronischen Motorsteuergerät in Abhängigkeit von dem Druck und der Zusammensetzung des Gas-Luftgemisches eingestellt werden, daß zur Vergleichmäßigung der Verbrennungsvorgänge in der Brennkraftmaschine in diese bedarfsabhängig Kraftstoff eingespritzt wird und daß die von der Brennkraftmaschine abgegebene Leistung zum Betrieb einer Kühleinrichtung oder eines Generators zum Betrieb einer Kühleinrichtung verwendet wird, die die Füllung des Stoffaustauschers kühlt.

4. Verfahren nach Anspruch 1 bis 3, dadurch gekennzeichnet, daß das aus dem Tankbehälter abgesaugte Gas-Luft-Gemisch vor der ersten Reinigungsstufe in einen oder mehrere Gasdruckbehälter oder Zwischenspeicher gepumpt wird.

5. Verfahren nach Anspruch 1 bis 4, dadurch gekennzeichnet, daß das aus dem Tankbehälter abgezogene Gas-Luft-Gemisch vor dem Eintritt in die erste Reinigungsstufe aufgesättigt und verdichtet wird.

6. Verfahren nach Anspruch 2 und 3, dadurch gekennzeichnet, daß das aus der Warmdrossel des Wirbelrohrs austretende Gas-Luft-Gemisch in einen Düsenverdichter geleitet und abgekühlt und verdichtet wird, daß das aus dem Wärmetauscher austretende Gas-Luft-Gemisch die Druckdüse des Düsenverdichters umströmt und kühlt und danach in den Strom des in den Düsenverdichter einströmenden Gas-Luft-Gemisches geleitet wird, daß das aus dem Düsenverdichter austretende Gas-Luft-Gemisch in ein weiteres Wirbelrohr tangential eingeleitet wird, wobei das aus dessen Kaltblende austretende Gas-Luft-Gemisch wiederum durch einen Prallabscheider und einen Wärmetauscher im warmdrosselseitigen Abschnitt dieses Wirbelrohrs und dann mit dem aus der Warmdrossel dieses Wirbelrohrs durch einen weiteren Prallabscheider austretenden Teilstrom des Gas-Luft-Gemisches der Brennkraftmaschine oder dem Stoffaustauscher zuströmt , wobei die in den letztgenannten Prallabscheidern abgeschiedenen kondensierten Kohlewasserstoffe flüssig dem Sammelbehälter zugeführt werden.

7. Verfahren nach Anspruch 1 bis 6, dadurch gekennzeichnet, daß das Gas-Luft-Gemisch bezüglich der Kohlenwasserstoffverbindungen in einer Membrankammer mit mikroporösen Membranen teilweise entgast wird, die als Stoffaustauscher dient oder ergänzend zum Stoffaustauscher vorgesehen ist.

8. Anlage zur Durchführung des Verfahrens nach Anspruch 1, mit einem eine erste Reinigungsstufe bildenden Stoffaustauscher (10), der mittels eines Kälteaggregats (15) kühlbar ist, das von einer Wärmekraftmaschine angetrieben wird, die mit dem Gasaustritt des Stoffaustauschers (10) verbunden ist, mit einem Tank (3), der mittels einer an der Oberseite (8) des Tanks (3) angeschlossenen Leitung (9) mit mindestens einem Stoffaustauscher (10) verbunden ist, dadurch gekennzeichnet, daß der mit einem flüssigen Mineralölprodukt wie Benzin gefüllt ist, das mittels eines mit einem Kühlaggregat (15) verbundenen Wärmetauschers (12) kühlbar ist, wobei der Stoffaustauscher (10) mittels einer Überlaufleitung (16) mit einem Sammelbehälter (17) und mittels einer weiteren gasaustrittsseitig angeordneten Leitung (18) mit einer mittels eines elektronischen Motorsteuergeräts (111) elektronisch gesteuerten Brennkraftmaschine (19) verbunden ist, die zusätzlich eine Kraftstoffeinspritzanlage (119) aufweist und als Antriebseinrichtung für das Kühlaggregat (15) oder einen zu dessen Antrieb dienenden Generator (31) ausgebildet ist.

9. Anlage zur Durchführung des Verfahrens nach Anspruch 2, mit einer ersten Reinigungsstufe zur Kühlung des aus einem Tank (3) abgesaugten zu reinigenden Gasgemisches, die einen Sammelbehälter (17) für in der ersten Reinigungsstufe flüssig kondensierte Kohlenwasserstoffe aufweist, und einer die zweite Reinigungsstufe bildenden Wärmekraftmaschine, die mit dem Gasaustritt der ersten Reinigungsstufe verbunden ist und zum Antrieb einer Einrichtung zur Abkühlung des zu reinigenden Gasgemisches in der ersten Reinigungsstufe dient, gekennzeichnet durch mindestens ein in Strömungsrichtung des Gas-Luft-Gemisches hinter dem Sammelbehälter (17) angeordnetes Wirbelrohr (210), das eingangsseitig mit einer Druckleitung (208) mit Verdichter (209) für druckbeaufschlagtes aufgesättigtes Gas-Luft-Gemisch verbunden ist, dessen Kaltblende (211) mit einem Prallabscheider (212) verbunden ist, dessen Ausgang mit einem im warmdrosselseitigen Abschnitt (216) des Wirbelrohrs (210) angeordneten Wärmetauscher (214) in Verbindung steht, und dessen Warmdrossel (215) mit einem weiteren Prallabscheider (218) verbunden ist, wobei beide Prallabscheider (212, 218) über Leitungen (219, 220, 221) an den Sammelbehälter (17) für flüssig abgeschiedene kondensierte Kohlenwasserstoffe angeschlossen sind, und der Wärmetauscher (214) und der weitere Prallabscheider (218) gasaustrittsseitig mit einer mittels eines elektronischen Motorsteuergeräts (111) elektronisch gesteuerten Brennkraftmaschine (19) verbunden sind, die zusätzlich eine Kraftstoffeinspritzanlage (119) aufweist und als Antriebseinrichtung für den Verdichter (209) ausgebildet ist.

10. Anlage zur Durchführung des Verfahrens nach Anspruch 3, mit einer ersten Reinigungsstufe mit einem gekühlten Stoffaustauscher (10) zur Kühlung des aus einem Tank 3 abgesaugten zu reinigenden Gasgemisches, der mit einem Sammelbehälter (17) für in der ersten Reinigungsstufe flüssig kondensierte Kohlenwasserstoffe verbunden ist, und einer die zweite Reinigungsstufe bildenden Wärmekraftmaschine, die mit dem Gasaustritt des Stoffaustauschers (10) in Verbindung steht und zum Antrieb eines mit dem Stoffaustauscher (10) verbundenen Kühlaggregats (15) dient, gekennzeichnet durch mindestens ein in Strömungsrichtung des Gas-Luft-Gemisches vor oder hinter dem Stoffaustauscher (10) angeordnetes Wirbelrohr (210), das eingangsseitig mit einer Druckleitung (208) mit Verdichter (209) für druckbeaufschlagtes aufgesättigtes Gas-Luft-Gemisch verbunden ist, dessen Kaltblende (211) mit einem Prallabscheider (212) verbunden ist, dessen Ausgang mit einem im warmdrosselseitigen Abschnitt (216) des Wirbelrohrs (210) angeordneten Wärmetauscher (214) in Verbindung steht, und dessen Warmdrossel (215) mit einem weiteren Prallabscheider (218) verbunden ist, wobei beide Prallabscheider (212, 218) über Leitungen (219, 220, 221) an den Sammelbehälter (17) für flüssig abgeschiedene kondensierte Kohlenwasserstoffe angeschlossen sind, und der Wärmetauscher (214) und der weitere Prallabscheider (218) gasaustrittsseitig mit einer mittels eines elektronischen Motorsteuergeräts (111) elektronisch gesteuerten Brennkraftmaschine (19) verbunden ist, die zusätzlich eine Kraftstoffeinspritzanlage (119) aufweist und als Antriebseinrichtung für das Kühlaggregat (15) oder einen zu dessen Antrieb dienenden Generator (31) ausgebildet ist.

11. Anlage nach Anspruch 8, dadurch gekennzeichnet, daß an der Leitung (18) eine Zuluftleitung (20) angeschlossen ist, die ein Drosselorgan (21) aufweist, das über einen Regler (22) in Abhängigkeit von der Konzentration von Kohlenwasserstoffverbindungen in dem aus dem Stoffaustauscher (10) austretenden Gas-Luft-Gemisch und/oder dem Sauerstoffbedarf für die Verbrennung zusätzlich in der Brennkraftmaschine (19) eingespritzten Brennstoffes einstellbar ist.

12. Anlage nach Anspruch 8 bis 10, dadurch gekennzeichnet, daß die Brennkraftmaschine (19) mit einem Generator (31) verbunden ist, der mit mindestens einem Akkumulator (32) oder einem Batteriesatz in Verbindung steht.

13. Anlage nach Anspruch 8, dadurch gekennzeichnet, daß zwischen dem Ansaugstutzen (27) der Brennkraftmaschine (19) und dem stoffaustauschseitigen Anschluß (28) der Leitung (18) ein Verdichter (29) angeordnet ist.

14. Anlage nach Anspruch 13, dadurch gekennzeichnet, daß der Verdichter (29) in einem Beipaßkanal (30) der Leitung (18) angeordnet ist.

15. Anlage nach Anspruch 8 bis 10 , gekennzeichnet durch mindestens einen mit dem zu entsorgenden Tank (3) verbundenen als Sammeltank dienenden Gasdruckbehälter (106, 107) oder als Zwischenspeicher dienenden Gasspeicher (44).

16. Anlage nach Anspruch 8 bis 10 , dadurch gekennzeichnet, daß als Brennkraftmaschine (19) eine Freikolben-Brennkraftmaschine verwendet wird.

17. Anlage nach Anspruch 8 bis 11 und 16, dadurch gekennzeichnet, daß das elektronische Motorsteuergerät (111) der Brennkraftmaschine (19) mit einem Gemischsensor (112), mit einem Abgassensor (114), der in der Abgasleitung (33) der Brennkraftmaschine (19) angeordnet ist, und mit der Einspritzpumpe (118) der Kraftstoffeinspritzanlage (119) verbunden ist.

18. Anlage nach Anspruch 17, dadurch gekennzeichnet, daß das elektronische Motorsteuergerät (111) mit einer Gasdruckpumpe (117) zur Befüllung der Gasdruckbehälter (106, 107) und einem Drucksensor (113) verbunden ist, der in dem mit der Brennkraftmaschine (19) verbundenen Gasdruckbehälter (106, 107) angeordnet ist.

19. Anlage nach Anspruch 15, dadurch gekennzeichnet, daß zwischen dem zu entsorgenden Tank (3) und der Brennkraftmaschine (19) mehrere in Reihe geschaltete Gasdruckbehälter (106, 107) angeordnet sind, an denen eingangsseitig ein Überdruck- und Rückschlagventil (109) angeordnet ist.

20. Anlage nach Anspruch 9 und 10, gekennzeichnet durch mindestens zwei vor dem Stoffaustauscher (10) angeordnete Wirbelrohre (210, 225), die über einen Düsenverdichter (223) miteinander verbunden sind, der in Strömungsrichtung aus einer Düse (241), einem Diffusor (242) und einer Druckdüse (224) besteht, wobei die Druckdüse (224) von einem Wärmetauscher (243) umgeben ist, der über eine Leitung (233) mit aus dem Wärmetauscher (216) des Wirbelrohrs (210) ausströmendem Gas-Luft-Gemisch beaufschlagbar ist und dessen Ausgang (244) mit in der Wand des Diffusors (242) ausgebildeten Ansaugöffnungen (245) verbunden ist.

21. Anlage nach Anspruch 20, dadurch gekennzeichnet, daß die Kaltblende (226) und Warmdrossel (230) des in Strömungsrichtung des Gas-Luft-Gemisches dem Düsenverdichter (223) nachgeordneten Wirbelrohrs (225) mit jeweils einem Prallabscheider (227, 231) verbunden sind, die über Leitungen (239, 240, 220) mit dem Sammelbehälter (17) verbunden sind.

22. Anlage nach Anspruch 21, dadurch gekennzeichnet, daß der der Kaltblende (226) zugeordnete Prallabscheider (227) mit einem Wärmetauscher (228) verbunden ist, der in dem warmdrosselseitigen Abschnitt (229) des dem Düsenverdichter (223) in Strömungsrichtung des Gas-Luft-Gemisches nachgeordneten Wirbelrohrs (225) angeordnet ist.

23. Anlage nach Anspruch 9, 10 und 20, dadurch gekennzeichnet, daß die Warmdrosseln (215, 230) einstellbar ausgebildet und ggf. von einer Regeleinrichtung betätigbar sind.

24. Anlage nach Anspruch 9 und 10, gekennzeichnet durch ein Wirbelrohr (210), das über eine Druckleitung (208) mit Druckluft beaufschlagt ist und dessen Kaltblende (211) mit dem Strömungskreis eines Wärmetauschers (12) des Stoffaustauschers (10) verbunden ist, dessen anderer Strömungskreis eingangsseitig mit einem Tank (3) und ausgangsseitig mit mindestens einem Prallabscheider (212) verbunden ist, dessen Flüssigkeitsausgang an einen Sammelbehälter (17) angeschlossen ist.

25. Anlage nach Anspruch 8 bis 24, dadurch gekennzeichnet, daß der Stoffaustauscher (10) als Blasenabsorber (130) mit integriertem Wärmetauscher (12) ausgebildet ist, der von einem Mantelrohr (135) umgeben ist, durch das zum Gehäuse (132) des Blasenabsorbers (130) ein Ringspalt (137) gebildet ist, in dem durch eine das Mantelrohr (135) spiralig umlaufende Wanne (133) ein Strömungskanal für das Gas-Luft-Gemisch mit Leitblechen (138) zur Abscheidung von Wasser ausgebildet ist, das vor Eintritt des Gas-Luft-Gemisches in die Füllung des Blasenabsorbers (130) über Abflußrohre (139) aus dem Blasenabsorber (130) abfließt.

26. Anlage nach Anspruch 8 bis 25, dadurch gekennzeichnet, daß in dem vom Gas-Luft-Gemisch durchströmten Leitungsstrang zwischen Tank (3) und Brennkraftmaschine (19) als Stoffaustauscher (10) mindestens eine Membrankammer mit mikroporösen Membranen angeordnet ist.

**Claims**

1. Method of reducing the hydrocarbon emission, been developed at petrol dumbs, tank truck filling stations and ships, where the gas-air-mixture sucked off the tank or tank receptacle that contains hydrocarbon emissions and that needs to be cleaned is cooled down in a first treatment of sewage and is partially degased in a mass transferer relative to the hydrocarbons and the condensed hydrocarbons are caught in a collecting basin, and in a second treatment of sewage the hydrocarbon emissions still remained in the gas mixture to be cleaned are burned in a heat engine and whereas the nascent energy is used for the actuation of a device used for cooling down the gas mixture, to be cleaned, in the first treatment of sewage, characterized in that the segregated hydrocarbon vapours deep-frozen in the first treatment of sewage mix themselves liquefied in the mass transferer's filling consisting of cooled, liquid mineral oil products like petrol, so that the gas-air-mixture emerged from the mass transferer is carried with diminished quota of hydrocarbons and mixed with combustion air, to an electronically controlled internal combustion-engine which operational parameters are adjusted by an electronic motor control device dependent on the pressure and on the composition of gas-air-mixture, that dependent on demand fuel is injected in the internal combustion-engine in order to homogenize the combustion process in there and that the power released by the internal combustion-engine is used for operating a cooling apparatus or a generator for operating a cooling apparatus which cools the charge of the mass transferer.

2. Method of reducing the hydrocarbon emission been developed at petrol dumbs, tank truck filling stations and ships where the gas-air-mixture sucked off the tank that contains hydrocarbon emissions and that needs to be cleaned is cooled down in a first treatment of sewage where a part of the hydrocarbon emissions are condensed and separated and are collected in a collecting basin, and in a second treatment of sewage the hydrocarbon emissions still remained in the gas mixture to be cleaned are burnt in a heat engine and whereas the nascent energy is used for the actuation of a device used for cooling down the gas mixture to be cleaned, in the first treatment of sewage, characterized in that the air-gas-mixture to be cleaned is tangentially blown into at least one vortex tube, that the cooled down gas-air-mixture out-flowing a cold orifice flows through a first baffle separator at which condensed hydrocarbons are separated and are led liquefied to a collecting basin, that the deep-frozen gas-air-mixture emerging out of the first baffle separator flows through a heat exchanger in the part of the vortex tube that is turned towards the warm throttle that the gas-air-mixture flowing towards the warm throttle flows through the heat exchanger and is cooled down in it and is led out of the warm throttle, after the exit, through a second baffle separator at which condensed hydrocarbons are separated and are led, liquefied, to the collecting basin, and that the portion of gas-air-mixture streaming out of the last baffle separator, concerning the direction of flow, and the heat exchanger is led to an electronically controlled internal combustion-engine which operational parameters are adjusted by an electronic motor control device dependent on the pressure and on the composition of the gas-air-mixture, that dependant on demand fuel is injected in the internal combustion-engine in order to homogenize the combustion process there and that the power released by the internal combustion-engine is used for operating a compressor in order to compression the gas-air-mixture blown into the first vortex tube during the first treatment of sewage.

3. Method of reducing the hydrocarbon emission being developed at petrol dumbs, tank truck filing stations and ships where the gas-air-mixture sucked off the tank or tank receptacle that contains hydrocarbon emissions and that needs to be cleaned is cooled down in a first treatment of sewage and is partially degased in a mass transferer relative to the hydrocarbons and the condensed hydrocarbons are collected in a collecting basin, and in a second treatment of sewage the hydrocarbon emissions still remained in the gas mixture to be cleaned are burned in a heat engine whereas the nascent energy is used for the actuation of a device used for cooling down the gas mixture, to be cleaned, in the first treatment of sewage, characterized in that the hydrocarbon vapours, deeply-fried deposited in the first treatment of sewage mix themselves liquefied in the filling of the mass transferer consisting of cooled, liquid mineral oil products such as petrol, and the fluid emerging from the mass transferer, such as petrol is collected in a collecting basin, then that the gas-air-mixture with decreased quota of hydrocarbons emerging from the mass transferer is tangentially blown into at least one vortex tube , that cooled-down gas-air-mixture, flowing out of the cold orifice, flows through a first baffle separator at which condensed hydrocarbons are deposited and are liquidly carried to a collecting basin, that the deep-frozen gas-air-mixture, emerged out of the first baffle separator flows through a heat exchanger in the section of the vortex tube that is directed towards the warm throttle, that the gas-air-mixture flowing toward the warm throttle flows through the heat exchanger and is cooled down there and is led through a second baffle separator after the exit of the warm throttle at which condensed hydrocarbons are separated and are liquidly carried to the collecting basin and that the portion of the gas-air-mixture flowing out of the last baffle separator and heat exchanger, concerning the direction of the flow of the gas-air-mixture, are led to an electronically adjusted controlled combustion-engine which operational parameters are controlled by an electronic motor control device dependent on the pressure and the composition of the gas-air-mixture, that depending on demand fuel is injected in the internal combustion-engine in order to homogenize the combustion process and that the power released by the internal combustion-engine is used for operating a cooling device or generator for operating a cooling device that cools the filling of the mass transferer.

4. Method according to claims 1 to 3, characterized in that the gas-air-mixture sucked off the tank is pumped in one or several gas pressure recaptacles or intermediate stores before the first treatment of sewage.

5. Method according to claims 1 to 4, characterized in that the gas-air-mixture stripped off the tank is compressed and saturated before entering the first treatment of sewage.

6. Method according to claim 2 and 3, characterized in that the gas-air-mixture, emerging from the warm throttle of the vortex tube is led into a jet condensor and is cooled down and condensed, that the gas-air-mixture emerging from a heat exchanger flows around and cools the pressure nozzle of the jet condensor and then is led in the stream of the gas-air-mixture flowing into the jet condensor, that the gas-air-mixture emerging from the jet condensor is tangentially led in another vortex tube at which the gas-air-mixture emerging from its cold orifice streams toward the internal combustion-engine or towards the mass transferer through a baffle separator and a heat exchanger in the warm throttle part of this vortex tube and then with the portion of the gas-air-mixture emerging from the warm throttle of this vortex tube through another baffle separator whereas the hydrocarbons emerged and condensed in the last baffle separators are liquidly led to the collecting basin.

7. Method according to claim 1 to 6, characterized in that the gas-air-mixture is partially degased in a membrane chamber with microporous membranes, relative to the hydrocarbons, that is used as a mass transferer or is additionally scheduled to the mass transferer.

8. Arrangement for carrying out the method according to claim 1, with a mass transferer (10) being a first treatment of sewage, that can be cooled because of refrigerating unit (15) that is driven by an internal combustion-engine which is connected with the gas exit of mass transferer (10), with a tank (3) that is connected with at least one mass transferer (10) by conduction (9) put on upper side (8) of tank (3), characterized in that the tank (3) is filled with a liquid mineral oil product such as petrol, which can be cooled by heat exchanger (12), connected with refrigerating unit (15), whereas mass transferer (10) is connected by overflow conduction (16) with collecting basin (17), and by a further conduction (18) at the gas outlet with internal combustion-engine (19) electronically controlled by a motor control device (111), that has an additionally fuel injection device (119) and that functions as a drive unit for the refrigerating unit (15) or a generator (31) used for its drive.

9. Arrangement for carrying out the method according to claim 2, with a first treatment of sewage for cooling the soon to be cleaned gasmixture being sucked off from a tank (3), that has collecting basin (17) for the hydrocarbons liquidly condensed in the first treatment of sewage, and an internal combusting-engine forcing the second treatmeant of sewage that is connected with the gas exit of the first treatment of sewage and is there for the actuation of a device for cooling down the to be cleaned gas-mixture in the first treatment of sewage, characterized by at least one vortex tube (210), put in the direction of flow of the gas-air-mixture behind collecting basin (17), that is connected on the entrance with pressure pipe (208) with compressor (209) for saturated pressurized gas-air-mixture, cold orifice (211) of vortex tube (210) is connected with baffle separator (212), the exit of which is connected with heat exchanger (214) in warm throttle section (216) of vortex tube (210), and the warm throttle (215) is connected with a further baffle separator (218), where as both baffle separators (212, 218) are connected to collecting basin (17) via conduction (219, 220, 221) for liquidly segregated, condensed hydrocarbons and the heat exchanger (214) and further baffle separator (218) are connected at the gas exit with internal combustion-engine (19) controlled by an electronic motor control device (111) that has additionally a fuel injection device (119) and is built as a drive unit for compressor (209).

10. Arrangement for carrying out the method according to claim 3, with a first treatment of sewage with a cooled mass transferer (10) for cooling the to be cleaned gas-mixture being sucked off from a tank (3) that is connected with a collecting basin (17) for the liquidly condensed hydrocarbons in the first treatment of sewage, and one internal combustion-engine forming the second treatment of sewage which is connected with the gas exit of mass transferer (10) and acting for the drive of refrigerating unit (15) connected with mass transferer (10), characterized by at least one vortex tube (210) put before or behind mass transferer (10) in the direction of flow of the gas-air-mixture that is connected, on the extrance, with pressure pipe (208) with compressor (209) for pressurized saturated gas-air-mixture which cold orifice (211) is connected with baffle separator (212), which entrance is connected with a heat exchanger (214) in warm throttle section (216) of vortex tube (210) and which warm throttle (215) is connected with a further baffle separator (218) whereas both baffle separators (212, 218) are connected via conductions (219, 220, 221) to the collecting basin (17) for liquidly segreated, condensed hydrocarbons, and the heat exchanger (214) and baffle separator (218) are connected at the gas exit with an electronically controlled internal combustion-engine (19) by an electronic motor control device (111) with an additionally fuel injection device (119) acting as drive device for refrigerating unit (15) or a generator (31) for driving the refrigerating unit (15).

11. Arrangement according to claim 8, characterized in that conduction (18) is connected to an air conduction (20) having a throttle device (21) which is adjustable by a control unit (22) dependent on the concentration of hydrocarbons in the air-gas-mixture emerging from mass transferer (10) and/or the oxygen demand for burning additonal fuel injected into the internal combustion-engine (19).

12. Arrangement according to claims 8 to 10 , characterized in that internal combustion-engine (19) is connected with generator (31) which is connected to at least one accumulator (32) or a set of batteries.

13. Arrangement according to claim 8, characterized in that there is a compressor (29) between aspirating hole (27) of internal combustion-engine (19) and connection (28) on the mass transferer side of conduction (18).

14. Arrangement according to claim 13, characterized in that compressor (29) is arranged in a by-pass-channel (30) of conduction (18).

15. Arrangement according to claim 8 to 10, characterized in that at least one gas pressure receptacle (107) is connected with tank (3) to be disposed, being used as collecting basin or as gas storage basin (44) for intermediate storage.

16. Arrangement according to claim 8 to 10, characterized in that a free-piston internal combustion-engine (19) is used as internal combustion-engine (19).

17. Arrangement according to claim 8 to 11 and 16 , characterized in that electronic motor control device (111) of internal combustion-engine (19) is connected with a mixture sensor (112), with a waste gas sensor (114) being arranged within waste gas pipe (33) of internal combustion-engine (19), and with an injection pump (118) of fuel injection device (119).

18. Arrangement according to claim 17, characterized in that the electronic motor control device (111) is connected with a gas force pump (117) for filling gas pump receptacle (106, 107) and with the pressure sensor (113) that is arranged within (106, 107) connected with internal combustion-engine (19).

19. Arrangement according to claim 10, characterized in that there are several gas pressure receptacles (106, 107) serial mounted between tank (3) to be disposed and internal combustion-engine (19) where there is at the entrance, arranged a non return and pressure control valve (109).

20. Arrangement according to claim 9 and 10, characterized by at least two vortex tubes (210, 225) arranged before the mass transferer (10) which are connected by a jet condensor (223) consisting in direction of flow of a nozzle (241), diffusor (242) and pressure nozzle (224) is surrounded by a heat exchanger (243) which is admittable by the air-gas-mixture flowing out via conduction (233) from the heat exchanger (216) of vortex tube (210), and which exit (244) is connected with aspirating holes (245) in the wall of diffusor (242).

21. Arrangement according to claim 20, characterized in that cold orifice (226) and warm throttle (230) of vortex tube (225) put behind jet condensor (223) in the direction of flow of the gas-air-mixture are connected with baffle separators (227, 231) in each case which are connected with collecting basin (17) via conduction (239, 240, 220).

22. Arrangement according to claim 21, characterized in that baffle separator (227), arranged with cold orifice (226), is connected with heat exchanger (228) that is arranged in warm throttle (229) of vortex tube (225) put behind jet condensor (223) in the direction of flow of the gas-air-mixture.

23. Arrangement according to claim 9, 10 and 20, characterized in that warm throttles (215, 230), are adjustably modelled and if need should be operatable by a control device.

24. Arrangement according to claim 9 and 10, characterized by a vortex tube (210) being admitted with compressured air via pressure pipe (208) and which cold orifice (211) is connected with flowcircle of heat exchanger (12) of mass transferer (10), which other flowcircle is connected at the entrance with tank (3) and at the exit with at least one baffle separator (212) which exit of fluid is connected with collecting basin (17).

25. Arrangement according to claim 8 to 24 , characterized in that the mass transferer (10) is arranged as bubble's absorber (130) with integrated heat exchanger (12) that is surrounded by outer steering column tube (135), by which annular gap (137) is formed to housing (132) of bubble's absorber (130), by the steering column tube (135) where a flow channel for the gas-air-mixture with baffle plate (138) for precipitating water is arranged through spiral tub (133), that flows out of bubble's absorber (130) via outlet pipe (139) before the gas-air-mixture enters bubble's absorber (130).

26. Arrangement according to claim 8 to 25 , characterized in that the fact there is at least on membrane chamber with micro-porous membranes as mass transferer (10) is arranged in the conduction between the tank (3) and internal combustion-engine (19).

## Revendications

1. Procédé pour réduire les émissions d'hydrocarbures qui se forment dans les entrepôts d'essence, postes de ravitaillement de wagons-citernes et pétroliers par lequel le mélange air-gaz contenant les émissions d'hydrocarbures aspirées hors de la citerne ou du réservoir à épurer dans un premier étage d'épuration est refroidi et dans lequel le composé d'hydrocarbures se dégage partiellement dans un dispositif prévu pour le transfert de matières, le condensat d'hydrocarbures étant recueilli dans un collecteur, les résidus étant brûlés dans un moteur thermique situé dans un deuxième étage d'épuration, l'énergie ainsi libérée étant utilisée pour l'entraînement d'un dispositif destiné à refroidir le mélange gazeux a épurer dans le premier étage d'épuration, caractérisé en ce que les vapeurs d'hydrocarbures séparées refroidies, collectées dans le premier étage d'épuration, se liquéfient lors du chargement du dispositif de transfert de matières avec des produits pétroliers liquides refroidis tels que l'essence, en ce qu'ensuite le mélange air-gaz qui s'échappe est envoyé en même temps que la partie réduite du composé d'hydrocarbures incluant un mélange d'air de combustion provenant d'un moteur à combustion interne commandé électroniquement hors du dispositif de transfert de matières, les paramètres de fonctionnement de l'organe de commande électronique du moteur étant ajustés en fonction de la pression et de la composition du mélange air-gaz, en ce que l'injection de carburant dans le processus de combustion du moteur à combustion interne s'effectue à la demande, en fonction de mesures comparatives, et en ce que la puissance fournie par le moteur à combustion interne est utilisée pour actionner un dispositif de refroidissement ou un générateur et sert également à refroidir la charge du dispositif de transfert de matières.

2. Procédé pour réduire les émissions d'hydrocarbures qui se forment dans les entrepôts d'essence, postes de ravitaillement de wagons-citernes et pétroliers par lequel le mélange air-gaz contenant les émissions d'hydrocarbures aspirées hors de la citerne ou du réservoir à épurer dans un premier étage d'épuration est refroidi et dans lequel se condense et se dépose une partie des émissions d'hydrocarbures qui est ensuite recueillie dans un collecteur, les résidus étant brûlés dans un moteur thermique situé dans un deuxième étage d'épuration, l'énergie ainsi libérée étant utilisée pour l'entraînement d'un dispositif destiné à refroidir le mélange gazeux à épurer dans le premier étage d'épuration, caractérisé en ce que le mélange air-gaz à épurer est soufflé de manière tangentielle dans un tube à tourbillonnement au moins, en ce que le mélange air-gaz effluant refroidi s'écoule par l'ouverture de l'unité de refroidissement à travers un premier piège à rebond, d'où il résulte que les condensats d'hydrocarbures sont fournis séparés et liquéfiés à un collecteur, en ce que le mélange air-gaz réfrigéré qui s'échappe du premier piège à rebond s'écoule à travers un piège thermique dans la section du tube à tourbillonnement orientée vers l'étranglement thermique, en ce que le mélange air-gaz affluant à l'étranglement thermique s'écoule à travers le piège thermique et y est refroidi, puis, après départ de l'étranglement thermique est envoyé à travers un deuxième piège à rebond, d'où il résulte que le condensat d'hydrocarbures est fourni séparé et liquéfié au collecteur et en ce que les sous-ensembles du mélange air-gaz effluant des derniers piège à rebond et piège thermique sont fournis dans le sens d'écoulement du mélange air-gaz à un moteur à combustion interne commandé électroniquement, les paramètres de fonctionnement de l'organe de commande électronique du moteur étant ajustés en fonction de la pression et de la composition du mélange air-gaz, en ce que l'injection de carburant dans le processus de combustion du moteur à combustion interne s'effectue à la demande, en fonction des mesures comparatives, et en ce que la puissance fournie par le moteur à combustion interne est utilisée pour actionner un compresseur afin de comprimer le mélange air-gaz soufflé dans le premier étage d'épuration à l'intérieur du premier tube à tourbillonnement.

3. Procédé pour réduire les émissions d'hydrocarbures qui se forment dans les entrepôts d'essence, postes de ravitaillement de wagons-citernes et pétroliers par lequel le mélange air-gaz contenant les émissions d'hydrocarbures aspirées hors de la citerne ou du réservoir, à épurer dans un premier étage d'épuration est refroidi et dans lequel le composé d'hydrocarbures se dégage partiellement dans un dispositif prévu pour le transfert de matières, le condensat d'hydrocarbures étant recueilli dans un collecteur, les résidus étant brûlés dans un moteur thermique disposé dans un deuxième étage d'épuration, l'énergie ainsi libérée étant utilisée pour l'entraînement d'un dispositif destiné à refroidir le mélange gazeux à épurer dans le premier étage d'épuration, caractérisé en ce que les vapeurs d'hydrocarbures séparées refroidies, collectèes dans le premier étage d'épuration, se liquéfient lors du chargement du dispositif de transfert de matières avec des produits pétroliers liquides refroidis tels que l'essence et le liquide tel que l'essence qui s'échappe du dispositif de transfert de matières est recueilli dans un collecteur, en ce qu'ensuite le mélange air-gaz qui s'échappe est soufflé de manière tangentielle en même temps que la partie réduite du composé d'hydrocarbures dans un tube à tourbillonnement au moins, en ce que le mélange air-gaz effluant refroidi s'écoule par l'ouverture de l'unité de refroidissement à travers un premier piège à rebond, d'où il résulte que les condensats d'hydrocarbures sont fournis séparés et liquéfiés à un collecteur, en ce que le mélange air-gaz réfrigéré qui s'échappe du premier piège à rebond s'écoule à travers un piège thermique dans la section du tube à tourbillonnement orienté vers l'étranglement thermique, en ce que le mélange air-gaz affluant à l'étranglement thermique s'écoule à travers le piège thermique y est refroide et, après départ de l'étranglement thermique, est envoyé à travers un deuxième piège à rebond d'où il résulte que le condensat d'hydrocarbures est fourni séparé et liquéfié au collecteur et en ce que les sous-ensembles du mélange air-gaz effluant des derniers piège à rebond et piège thermique sont fournis dans le sens d'écoulement du mélange air-gaz à un moteur à combustion interne commandé électroniquement, les paramètres de fonctionnement de l'organe de commande électronique du moteur étant ajustés en fonction de la pression et de la composition du mélange air-gaz, on ce que l'injection de carburant dans le processus de combustion du moteur à combustion interne s'effectue à la demande, en fonction des mesures comparatives, et en ce que la puissance fournie par le moteur à combustion interne est utilisée pour actionner un dispositif de refroidissement ou un générateur et sert également à refroidir la charge du dispositif de transfert de matières.

4. Procédé selon les revendications 1 à 3, caractérisé en ce que le mélange air-gaz prélevé par aspiration est pompé, avant le premier étage d'épuration, dans un réservoir de gaz sous pression ou dans un réservoir de retenue d'eau.

5. Procédé selon les revendications 1 à 4, caractérisé en ce que le mélange air-gaz prélevé du réservoir est comprimé et saturé avant son entrée dans le premier étage d'épuration.

6. Procédé selon les revendications 2 et 3, caractérisé en ce que le mélange air-gaz qui s'échappe de l'étranglement thermique du tube à tourbillonnement est refroidi, comprimé et envoyé dans un compresseur à tuyères, en ce que le mélange air-gaz qui s'échappe du piège thermique circule et refroidit les tuyères de pression du compresseur à tuyères, puis, est envoyé dans le flux du mélange air-gaz affluant dans le compresseur à tuyères, en ce que le mélange air-gaz qui s'échappe du compresseur à tuyères est envoyé de manière tangentielle dans un tube à tourbillonnement plus large, d'où il résulte que le mélange air-gaz qui s'échappe par l'ouverture de l'unité de refroidissement afflue de nouveau à travers un piège à rebond et un piège thermique dans la section latérale d'étranglement thermique de ce tube à tourbillonnement puis, en même temps que le courant partiel du mélange air-gaz provenant du moteur à combustion interne ou du dispositif de transfert de matières s'échappe d'un piège à rebond plus large par l'étranglement thermique de ce tube à tourbillonnement, d'où il résulte que le condensat d'hydrocarbures liquide séparé est envoyé dans le piège à rebond mentionné précédemment présent dans le collecteur.

7. Procédé selon les revendications 1 à 6, caractérisé en ce que le mélange air-gaz correspondant aux composés d'hydrocarbures se dégage partiellement dans une chambre à membrane dont la membrane est microporeuse, laquelle sert de dispositif de transfert de matières ou est prévue en complément du dispositif de transfert de matières.

8. Dispositif pour la mise en oeuvre du procédé selon la revendication 1 comportant un premier dispositif de transfert de matières (10), lequel peut être refroidi au moyen d'une unité de refroidissement (15) qui est commandée par un moteur thermique, lequel est relié à l'entrée des gaz du dispositif de transfert de matières par une citerne (3) et est relié à la partie supérieure (8) de la citerne (3) par une conduite (9) attenante ainsi qu'à un dispositif de transfert de matières (10) au moins caractérisé en ce que celui-ci est chargé d'un produit pétrolier liquide tel que l'essence qui, au moyen d'un piège thermique (12) relié à une unité de refroidissement (15), peut être refroidie, d'où il résulte que le dispositif de transfert de matières (10) est relié par une conduite de déversement (16) à un collecteur (17) et par une conduite (18) disposée sur une partie d'entrée de gaz plus large à un moteur à combustion interne commandé électroniquement (19) au moyen d'un organe de commande de moteur électronique (111), ce moteur comportant un dispositif approprié au carburant (119) et formant un dispositif de commande destiné à l'unité de refroidissement (15) ou un générateur (31) assurant cette commande.

9. Dispositif pour la mise en oeuvre du procédé selon la revendication 2 comportant un premier étage d'épuration pour le refroidissement du mélange à épurer prélevé d'une citerne (3) par aspiration, ce premier étage étant relié à un col lecteur (17) destiné au condensat d'hydrocarbures liquide présent dans le premier étage d'épuration et comportant un moteur thermique disposé dans le deuxième étage d'épuration, ce moteur thermique étant relié à la sortie des gaz du premier étage d'épuration et servant à entraîner un dispositif de refroidissement du mélange gazeux à épurer dans le premier étage d'épuration, caractérisé en ce qu'un au moins tube à tourbillonnement (210) est disposé dans le sens d'écoulement du mélange air-gaz en-dessous du collecteur (17), lequel est relié en entrée par une conduite sous pression (208) à un compresseur (209) pour le mélange air-gaz saturé et sous pression, l'ouverture de l'unité de refroidissement (24) communiquant avec un piège à rebond (212), dont la sortie communique avec un piège thermique disposé dans la section latérale de l'étranglement thermique (216) du tube à tourbillonnement (210) et dont un étranglement thermique (215) est relié à un piège à rebond (218) plus large, d'où il résulte que les deux pièges à rebond (212, 218) sont fermés au niveau des conduites (219, 220, 221) au point du collecteur (17) en ce qui concerne le condenseur d'hydrocarbures liquide séparé et le piège thermique (214) ainsi que le piège à rebond (210) plus large est relié en sortie des gaz à un moteur à combustion interne commandé électroniquement (119), lequel comporte en outre un dispositif approprié au carburant (119) et forme un dispositif de commande destiné au compresseur (209) assurant cette commande.

10. Dispositif pour la mise en oeuvre du procédé selon la revendication 2 comportant un premier étage d'épuration pourvu d'un dispositif de transfert de matières (10) refroidi pour le refroidissement du mélange à épurer et prélevé d'une citerne (3) par aspiration, ce premier étage étant relié a un col lecteur (17) destiné au condensat d'hydrocarbures liquide présent dans le premier étage d'épuration et comportant un moteur thermique disposé dans le deuxième étage d'épuration relié à la sortie des gaz du dispositif de transfert de matières et servant à commander une unité de refroidissement (15) reliée au dispositif de transfert de matières caractérisé en ce que pour le mélange air-gaz saturé, sous pression, un tube à tourbillonnement (210) au moins est disposé à l'avant ou à l'arrière du dispositif de transfert de matières dans le sens de l'écoulement du mélange air-gaz, en ce que le mélange air-gaz saturé, sous pression, est relié par une conduite (208) à un compresseur (209), l'ouverture de l'unité de refroidissement (211) communiquant avec la section et étant relié à un piège a rebond (212), dont la sortie communique avec un piège thermique disposé dans la section latérale de l'étranglement thermique (216) du tube à tourbillonnement (210) et dont un étranglement thermique (215) est relié à un piège à rebond (218) plus large, d'où il résulte que les deux pièges à rebond (212, 218) sont fermés au niveau des conduites (219, 220, 221) au point du col lecteur (17) en ce qui concerne le condenseur d'hydrocarbures liquide séparé, le piège thermique (214) ainsi que le piège à rebond (218) plus large étant reliés du côté sortie des gaz à un moteur à combustion interne (19) commandé électroniquement, au moyen d'un organe de commande électronique de moteur (111), lequel comporte en outre un dispositif approprié au carburant (119) et forme un dispositif de commande de l'unité de refroidissement (15) ou un générateur (31) assurant cette commande.

11. Dispositif selon la revendication 8, caractérisé en ce qu'une conduite d'air soufflé (20) est fermée au niveau de la conduite (18), laquelle comporte un dispositif d'étranglement (21) qui peut être orienté par-un régulateur (22) en fonction de la concentration du composé d'hydrocarbures dans le mélange air-gaz qui s'échappe du dispositif de transfert de matières (10) et/ou de la demande d'oxygène pour la combustion complémentaire du combustible injecté dans le moteur à combustion interne (19).

12. Dispositif selon les revendications 8 à 10, caractérisé en ce que le moteur à combustion interne (19) est relié à un générateur (31) lui-même est relié à un accumulateur au moins ou à un ensemble de batteries.

13. Dispositif selon la revendication 8, caractérisé en ce qu'entre l'orifice d'aspiration (27) du moteur à combustion interne (19) et le raccordement au côté transfert de matières (28) de la conduite (18) est disposé un compresseur (29).

14. Dispositif selon la revendication 13, caractérisé en ce que le compresseur (29) est disposé dans un canal de dérivation (30) de la conduite (18).

15. Dispositif selon les revendications 8 à 10, caractérisé en ce qu'au moins une citerne d'élimination (3) est reliée à un réservoir de gaz sous pression servant de collecteur (106, 107) ou à un réservoir de gaz (44) servant de réservoir de retenue d'eau.

16. Dispositif selon les revendications 8 à 10, caractérisé en ce qu'un moteur a combustion interne du type à piston libre est utilisé comme moteur à combustion interne (19).

17. Dispositif selon les revendications 8 à 11 et 16, caractérisé en ce que l'organe de commande électronique de moteur (111) du moteur à combustion interne (19) comporte un détecteur de mélange (112) et un détecteur de gaz d'échappement (114), ce dernier étant disposé dans la conduite d'échappement (33) du moteur à combustion interne (19) et étant relié à la pompe d'injection (118) du dispositif d'injection de carburant (119).

18. Dispositif selon la revendication 17, caractérisé en ce que l'organe de commande électronique du moteur (111) est relié à une pompe de pression du gaz (117) lors du chargement du réservoir de gaz sous pression (106, 107) et à un capteur de pression (113), ce dernier étant disposé dans le réservoir de gaz sous pression (106, 107) relié au moteur à combustion interne (19).

19. Dispositif selon la revendication 1, caractérisé en ce qu'entre la citerne d'élimination (3) et le moteur à combustion interne (19) des réservoirs de gaz sous pression couplés en série sont disposés en plusieurs rangées et en ce qu'une soupape de retenue et de surpression est disposée au niveau d'un côté d'arrivée.

20. Dispositif selon les revendications 9 et 10, caractérisé en ce qu'au moins deux tubes à tourbillonnement (210, 225) placés à l'avant du dispositif de transfert de matières (10) sont reliés l'un à l'autre au-dessus d'un compresseur à tuyères (223) constitué d'une tuyère (241), d'un diffuseur (242) et d'une tuyère de pression (224), d'où il résulte que cette dernière est entourée d'un piège thermique (243) auquel peut être injecté par une conduite (233) un mélange air-gaz effluant du piège thermique (216) situé dans le tube à tourbillonnement (210) et la sortie duquel est reliée à l'orifice d'aspiration (245) formé dans la paroi du diffuseur (242).

21. Dispositif selon la revendication 20, caractérisé en ce que l'ouverture de l'unité de refroidissement (226) et l'étranglement thermique (230) des tubes à tourbillonnement (225) disposés à la suite dans le sens d'écoulement du mélange air-gaz du compresseur à tuyères (223) sont reliés chacun à un piège à rebond (227, 231), ces derniers étant reliés par les conduites (239, 240 et 220) au collecteur (17).

22. Dispositif selon la revendication 21, caractérisé en ce que le piège à rebond (227) qui doit être disposé dans l'ouverture de l'unité de refroidissement (226) est relié à un piège thermique (228) qui est placé dans la section (229) du côté étranglement thermique des tubes à tourbillonnement (225) disposés à la suite dans le compresseur à tuyères (223) dans le sens d'écoulement du mélange air-gaz.

23. Dispositif selon les revendications 9, 10 et 20, caractérisé en ce que les étranglements thermiques (215, 230) sont orientables et peuvent éventuellement être actionnés par un régulateur.

24. Dispositif selon les revendications 9 et 10, caractérisé en ce qu'il peut être injecté à un tube à tourbillonnement (210) un air sous pression par une conduite sous pression (208) l'ouverture de l'unité de refroidissement étant reliée par un courant circulaire de piège thermique (12) situé dans le dispositif de transfert de matières (10), un autre courant circulaire étant relié en entrée à une cuve (3) et en sortie à un piège à rebond (212) au moins, la sortie de liquide étant fermée au niveau d'un collecteur (17).

25. Dispositif selon les revendications 8 à 24, caractérisé en ce que le dispositif de transfert de matières (10) se présente sous la forme d'un absorbeur de bulles (130) pourvu d'un piège thermique (12) intégré lequel est entouré d'un tube de protection (135), une aire d'admission (137) étant formée à travers celui-ci jusqu'au logement (132) de l'absorbeur de bulles (130) dans lequel est formé à travers une cuve en spirale tournante (133) un canal d'écoulement pour le mélange air-gaz comportant une chicane (138) destinée à permettre la précipitation de l'eau qui s'écoule par le tube d'écoulement (139) hors de l'absorbeur de bulles (130) avant l'arrivée du mélange air-gaz lors du chargement de l'absorbeur de bulles.

26. Dispositif selon les revendications 8 à 25, caractérisé en ce qu'une chambre à membrane au moins pourvue d'une membrane microporeuse est disposée dans le tronçon de conduite à travers lequel passe le mélange air-gaz entre la citerne (3) et le moteur à combustion interne (19) sous la forme du dispositif de transfert de matières (10).

Fig.1

Fig.2

EP 0 298 288 B1

201

Fig.3

EP 0 298 288 B1

Fig.4

Fig.5

Fig. 6

Fig.7